# FASCICULE DE BREVET EUROPEEN

(11) **EP 0 845 349 B1**
(45) Date de publication et mention de la délivrance du brevet: **06.03.2002**
(21) Numéro de dépôt: 97119878.3
(22) Date de dépôt: 13.11.1997
(51) Int. Cl.: B29D 30/70, B29D 30/30, B29C 70/32

(54) **Guide-fil amovible, recevant des fils projetés sur une surface**
Lösbare Führungsdrahtanordnung zur Führung von Seilen die auf eine Fläche projektiert werden
Detachable guidewire assembly for guiding cords being projected on a surface

(30) Priorité: 27.11.1996 FR 9614633
(43) Date de publication de la demande: 03.06.1998
(73) Titulaire: SEDEPRO, F-75015 Paris (FR)
(72) Inventeur: Debroche, Claude, 63118 Cebazat 6 (FR)
(74) Mandataire: Bauvir, Jacques

(56) Documents cités:
- US-A- 3 894 906
- US-A- 4 952 259
- US-A- 4 992 123

## Description

La présente invention concerne en particulier la fabrication des pneumatiques. Plus précisément, elle se rapporte à la fabrication d'armatures de renforcement, notamment celles que l'on trouve sous la bande de roulement de pneumatiques à ceinture, dont la carcasse est le plus souvent radiale.

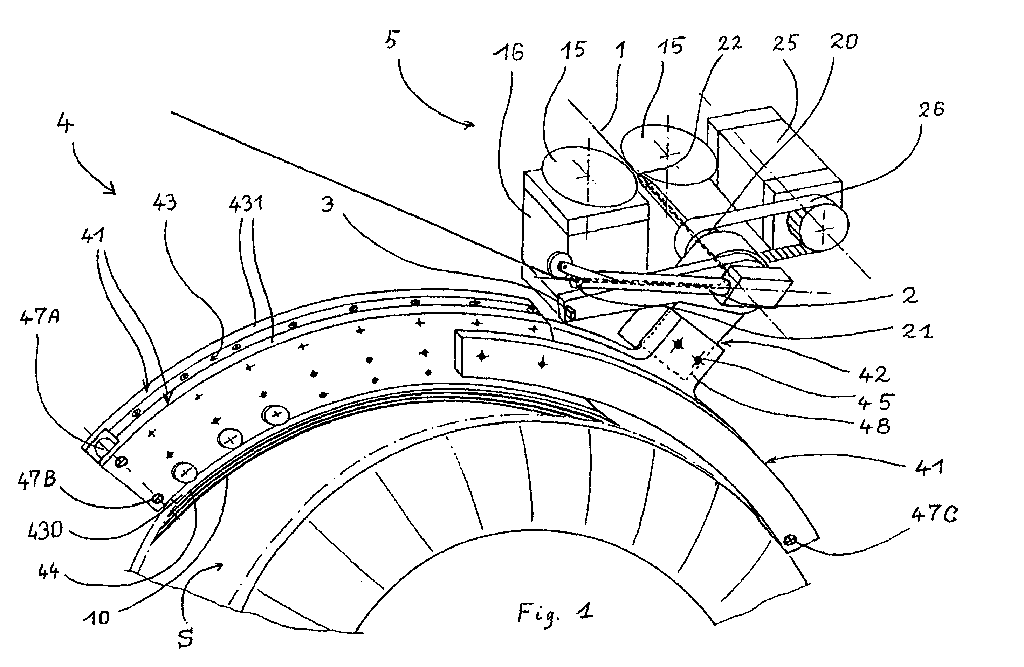

Par le brevet US 4 952 259, l'état de la technique connaît une tentative de fabriquer de tels renforcements non plus sous forme de produits semi-finis appelés "nappes", préparés à plat, que l'on incorpore par la suite lors de l'assemblage de l'article concerné, mais directement en cours de fabrication, par exemple directement dans l'ébauche de pneumatique, et à partir d'un fil continu. Cette proposition est basée sur la projection d'un fil à la manière de la lanière d'un fouet. La figure 1 de la présente demande illustre un appareil de fabrication d'un renforcement pour pneumatique utilisant ce principe. Un tel appareil utilise un fil 1, conditionné par exemple sous la forme d'une bobine d'alimentation, non représentée. L'appareil projette des tronçons 10 dudit fil sur une surface de réception S, ici appartenant audit pneumatique en cours de fabrication. Le terme "fil" doit bien entendu être compris dans un sens tout à fait général, englobant un monofilament, un multifilament, un câble ou un retors ou un assemblage équivalent, et ceci quelle que soit la matière constituant le fil ou le traitement qu'il a subi, par exemple un traitement de surface pour favoriser sa liaison intime avec du caoutchouc, voire encore un traitement de gommage entourant ledit fil d'une couche de caoutchouc, pour permettre son adhésion directe sur le support lors de sa projection.

Ledit appareil comporte un ensemble 5 comprenant :
- des moyens d'appel de fil 1, à partir d'une source de fil non représentée, par exemple une bobine,
- un conduit rotatif 2 fixé sur un arbre 20 constituant l'axe de rotation dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif 2,
- des moyens pour sectionner le fil agissant sur le fil de façon à libérer un tronçon à chaque tour dudit conduit rotatif 2.

En outre, ledit appareil comprend un guide-fil, désigné en général par la référence 4, pour recevoir des tronçons 10 de fil. Pour plus de détails sur le fonctionnement d'un appareil de ce type, le lecteur est invité à consulter le brevet US 4 952 259 susmentionné. Rappelons simplement que ledit guide-fil 4 est positionné par rapport audit conduit rotatif 2 de façon à recevoir le fil, ou plus précisément des tronçons 10 prélevés au fur et à mesure sur ce fil, dans le plan de rotation dudit conduit 2. Le guide-fil 4 reçoit le tronçon 10 de fil, qui passe au travers de ce guide-fil et sort par un orifice de projection 40 positionné à proximité immédiate de la surface sur laquelle le tronçon de fil doit être déposé et maintenu par adhérence. Le guide-fil comporte une paire de déflecteurs délimitant au moins un dégagement intérieur allongé, placé dans ledit plan de rotation, agencés de façon à laisser entre eux une fente dans laquelle peut passer chaque tronçon de fil.

L'objectif de la présente invention est de simplifier la réalisation d'un tel guide-fil et de faciliter l'utilisation d'un tel appareil de pose de fils pour une large gamme d'articles fabriqués, par exemple pour une gamme de pneumatiques comprenant de nombreux types différents, impliquant des dimensions différentes de renforcements de sommet, des bombés plus ou moins accentués de la surface sur laquelle on projette les tronçons de fil, ou bien encore des types de fils différents.

Selon l'invention, le guide-fil est un sous-ensemble unitaire comportant un berceau formant un cadre pourvu d'une portée de fixation localisée, permettant la fixation amovible dudit guide-fil audit ensemble, ledit berceau supportant les déflecteurs montés en vis à vis sur ledit cadre.

Le guide-fil forme lui aussi un sous-ensemble compact, qui prend appui sur la carcasse de l'appareil de pose des fils proprement dit. Il lui est fixé d'une façon robuste, mais facilement détachable. De ce fait, il est très simple de changer de guide-fil, à la demande. On peut réaliser autant de guide-fil que nécessaire, par exemple autant que de courbures différentes présentées par la surface sur laquelle on fouette les tronçons 10 de fil. Il n'est dès lors plus utile de prévoir un mécanisme d'ajustement du guide-fil à la courbure de la surface de réception. S'il est nécessaire d'utiliser une configuration différente pour le guide-fil, cela se fait très simplement en changeant le guide-fil lui-même. On peut stocker plusieurs guide-fil préconfigurés, ce qui fait que ce changement peut être exécuté très rapidement.

Tous les détails de réalisation de l'invention sont expliqués dans la suite, avec l'aide des figures jointes.
La figure 1 est une perspective montrant le guide-fil selon l'invention.
La figure 2 est une autre vue, partielle, du guide-fil.

A la figure 1, on voit l'ensemble 5 dont la fonction est de délivrer des tronçons de fils pourvus d'une quantité de mouvement leur permettant de rejoindre la surface sur laquelle on souhaite les déposer. Le fil 1 est entraîné au moyen de galets 15 entre lesquels il est pincé. L'un de ces galets est entraîné en rotation par le moteur 16. Un moteur 25 entraîne l'arbre 20 par une courroie 26. Un couteau 3 stationnaire, disposé dans la trajectoire du fil 1 juste en aval de l'extrémité radiale extérieure 21, sectionne le fil à chaque tour du conduit rotatif 2.

Il est important de noter que, par rapport à tous les modes de réalisation décrits dans le brevet US 4 952 259 déjà mentionné, les organes de l'ensemble 5 sont disposés de façon à ce que toutes les pièces mécaniques de l'ensemble 5 soient regroupées d'un seul côté du conduit rotatif 2. Autrement dit, la commande de la rotation dudit conduit et la commande d'entraînement du fil 1 par galets sont situés du même côté. Cela est rendu possible en déportant le moteur 25 par rapport à l'arbre 20. Cela rend l'édifice mécanique très compact et facilite la conception d'une portée de fixation 42 unique, de dimensions faibles par rapport à l'encombrement du guide-fil 4. On pourrait aussi utiliser un moteur électrique placé en ligne avec le conduit rotatif 2, l'arbre dudit moteur étant alors creux.

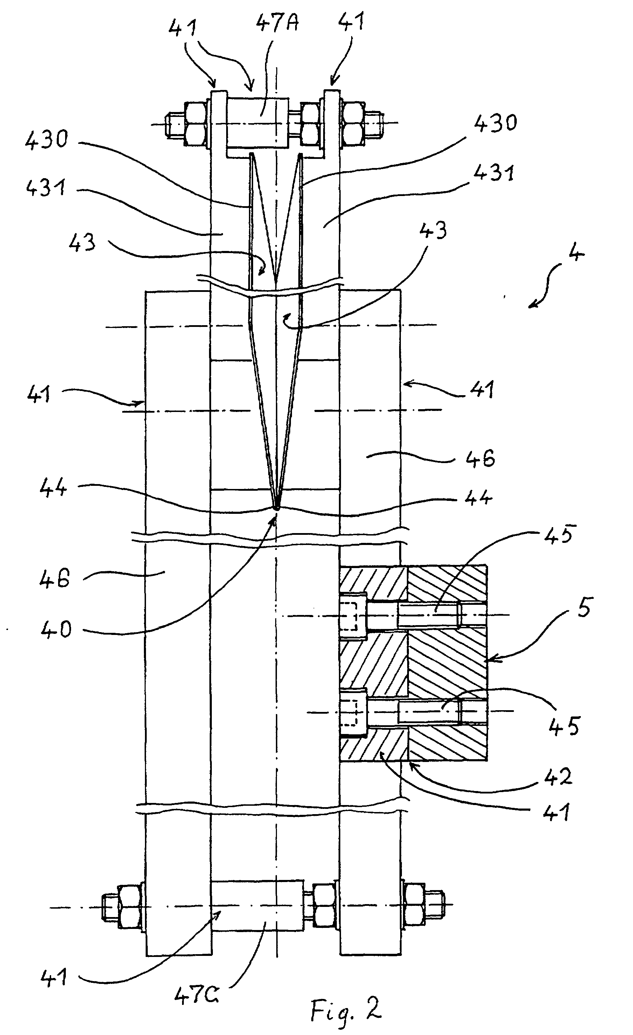

On voit que le guide-fil 4 est monté en porte-à-faux sur la carcasse de l'ensemble 5 contenant le conduit rotatif 2. La portée de fixation 42 est située à l'interface entre le guide-fil 4 et l'ensemble 5 (voir figure 2). Ladite portée est continue et entièrement circonscrite par une ligne fermée 48 (figure 1). La fixation est ainsi localisée et unique. Elle est conçue pour permettre la fixation amovible dudit guide-fil 4 audit ensemble 5. On peut pour cela utiliser un système d'attache rapide ou même très simplement des vis 45. Le guide-fil jouant un rôle de guidage et freinage pour garantir une grande précision dans la dépose des tronçons 10 de fil, il est important que la portée de fixation 42 et les moyens de fixation choisis, ici des vis 45, permettent une fixation suffisamment robuste.

Le guide-fil 4 comporte donc un berceau formant un cadre, désigné en général par la référence 41 pour viser toutes les pièces qui le constitue. Ce berceau 41 supporte une paire de déflecteurs 43 délimitant un dégagement intérieur allongé, contenant ledit plan de rotation. Les déflecteurs sont constitués chacun par une tôle 430, fixée sur un support plus massif 431, faisant partie du berceau ou bien rapporté à l'intérieur de celui-ci. Dans le mode de réalisation illustrant l'invention, le berceau 41 est formé par deux barres cintrés 46, par chacun des supports massifs 431, et par trois entretoises 47A, 47B et 47C. Vu dans le plan de projection des tronçons, le berceau 41 a sensiblement l'allure d'un rectangle incurvé, fermé et allongé, formé par deux branches sensiblement parallèles, reliées entre elles par leurs extrémités. Le caractère fermé du berceau permet de concilier rigidité, légèreté, et ceci allié à une fixation localisée permet de le rendre facilement amovible. Notons que le berceau peut aussi prendre son caractère fermé au moment et par les moyens de la fixation à l'ensemble 5, le sens qu'il faut donner à la caractéristique « berceau fermé » comprenant ce mode de réalisation. Les déflecteurs sont montés à l'intérieur desdites branches, et la portée est aménagée sur l'une desdites branches, du côté opposé à l'un desdits déflecteurs. Les déflecteurs sont conformés de façon à ce que l'écartement entre chaque déflecteur aille en se rétrécissant au fur et à mesure que l'on se rapproche de l'orifice de projection (voir figure 2).

Le rectangle que forme le berceau 41 laisse un dégagement suffisamment long pour que les tronçons 10 puissent passer au travers. L'entretoise 47C ne gêne ni le passage du tronçon 10 qui vient d'être libéré par le couteau 3, ni le passage de l'extrémité du fil qui sort de l'extrémité radiale extérieure 21 du conduit rotatif 2. On se souvient que l'entraînement du fil provoque une avance continue de celui-ci, et que juste après sectionnement par le couteau 3, l'extrémité du fil (on ne désigne pas ici le tronçon) forme une trajectoire en spirale dans le plan de rotation du conduit 2. L'entretoise 47C doit donc se situer radialement au delà de cette trajectoire pour ne pas gêner le mouvement du fil.

Les déflecteurs sont agencés de façon à laisser entre eux une fente au travers de laquelle chaque tronçon de fil peut passer en force. Chaque déflecteur comporte, du côté de l'orifice de projection, une bordure 44 qui est incurvée de façon à approcher la forme de la surface de réception S sur laquelle on projette les tronçons 10 de fil. Cette bordure 44 correspond au bord inférieur de la tôle 430 correspondante. Dans cet exemple, la bordure épouse le bombé du sommet d'un pneu vu en section plane comprenant un rayon et formant un angle typique des fils de renforcement de sommet. Plus généralement, la trace que fait la projection orthogonale de chacune desdites bordures dans le plan de rotation du conduit rotatif 2 est non linéaire pour épouser plus ou moins les courbures de la surface de réception.

Les dimensions de la portée de fixation 42 sont nettement plus faibles que la longueur des déflecteurs mesurée le long de ladite bordure 44, c'est à dire le long de la fente au travers de laquelle passent les tronçons 10.

Le jeu subsistant entre la bordure 44 et la surface de projection S est sensiblement constant (voir figure 1). Il correspond par exemple à deux ou trois fois l'épaisseur d'un tronçon 10 de fil. Grâce au fait que la tôle 430 permet d'assurer un guidage continu du tronçon 10 tout le long de sa longueur, on obtient une dépose précise du tronçon à l'emplacement souhaité. En pratique, ce ne sont que les tôles 430 qui doivent être découpées au profil approché de la surface S. Par ailleurs, le frottement des tronçons 10 sur ces tôles provoque à la longue une certaine usure de celles-ci. Pour toutes ces raisons, il est très pratique de pouvoir les remplacer. Mais, afin de ne pas obérer la productivité des machines, l'invention permet de procéder au remplacement des tôles sur un guide-fil non monté sur l'ensemble 5. On intervient ainsi sur un sous-ensemble (guide-fil 4) en atelier, en disposant de tout le temps nécessaire pour monter et régler correctement ces tôles 430, puis on peut monter ce sous-ensemble sur la machine au moment voulu.

Le berceau 41 constitue ainsi un support mécanique sur lequel sont regroupés tous les éléments du guide-fil. Par ailleurs, on sait que le conduit rotatif et les organes de motorisation du fil forment un ensemble 5 qu'il faut approcher de la surface sur laquelle on souhaite fabriquer un renforcement de sommet, et positionner correctement, pour que les fils soient projetés exactement à l'endroit voulu. Il en est de même pour le guide-fil. Le berceau 41 étant rendu solidaire dudit ensemble 5, on comprend que le guide-fil 4 suit exactement les mouvements qu'un mécanisme non représenté peut conférer à l'ensemble 5 pour lui permettre de s'approcher du support sur lequel on fabrique un pneu.

## Revendications

1. Appareil de fabrication d'un renforcement à partir d'un fil déposé directement à sa place finale en projetant des tronçons dudit fil sur une surface de réception (S), ledit appareil comportant un ensemble (5) comprenant :
• des moyens d'appel de fil (1),
• un conduit rotatif (2) fixé sur un arbre (20) constituant l'axe de rotation dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
• des moyens pour entraîner en rotation ledit conduit rotatif (2),
• des moyens pour sectionner le fil agissant sur le fil de façon à libérer un tronçon (10) à chaque tour dudit conduit rotatif (2),
• un guide-fil (4) pour recevoir des tronçons de fil, ledit guide-fil étant positionné par rapport audit conduit rotatif de façon à recevoir le fil dans le plan de rotation dudit conduit, ledit guide-fil ayant un orifice (40) de projection hors duquel le fil peut sortir,
• ledit guide-fil comportant une paire de déflecteurs délimitant au moins un dégagement intérieur allongé, placé dans ledit plan de rotation, agencés de façon à laisser entre eux une fente dans laquelle peut passer chaque tronçon de fil,
**caractérisé en ce que** le guide-fil est un sous-ensemble unitaire comportant un berceau formant un cadre (41) pourvu d'une portée de fixation localisée (42) permettant la fixation amovible dudit guide-fil audit ensemble, et **en ce que** les déflecteurs sont montés en vis-à-vis sur ledit cadre.

2. Appareil selon la revendication 1, conformé pour fabriquer in situ un renforcement pour pneumatique pendant sa fabrication, dans lequel chaque déflecteur comporte du côté de l'orifice de projection (40) une bordure (44) qui est incurvée de façon à approcher la forme de ladite surface de réception.

3. Appareil selon la revendication 1 ou 2, dans lequel ladite portée de fixation est de dimensions nettement plus faibles que la longueur des déflecteurs mesurée le long de la dite fente.

4. Appareil selon l'une des revendications 1 à 3, dans lequel ladite portée de fixation est continue et entièrement circonscrite par une ligne fermée.

5. Appareil selon l'une des revendications 1 à 4, dans lequel ledit berceau a sensiblement l'allure d'un rectangle incurvé, fermé et allongé, formé par deux branches parallèles reliées entre elles par leurs extrémités, lesdits déflecteurs étant montés à l'intérieur desdites branches, et la portée étant aménagée sur l'une desdites branches, du côté opposé à l'un desdits déflecteurs.

6. Appareil selon l'une des revendications 1 à 5, dans lequel l'écartement entre chaque déflecteur va en se rétrécissant au fur et à mesure que l'on se rapproche de l'orifice de projection.

7. Appareil selon la revendication 2, dans lequel la trace que fait la projection orthogonale de chacune desdites bordures dans le plan de rotation est non linéaire.

## Patentansprüche

1. Gerät zur Herstellung einer Verstärkung ausgehend von einem Faden, der direkt auf seinen endgültigen Platz aufgebracht wird, indem Abschnitte dieses Fadens auf eine Empfangsfläche (S) geschleudert werden, wobei das Gerät eine Einheit (5) aufweist, die enthält:
• Einrichtungen zur Zufuhr eines Fadens (1),
• eine drehbare Leitung (2), die auf einer die Drehachse der Leitung bildenden Welle (20) derart befestigt ist, daß das äußere radiale Ende (21) der Leitung im wesentlichen radial in bezug auf die Drehachse ausgerichtet ist, wobei die Leitung den von den Zufuhreinrichtungen kommenden Faden (1) an ihrem zentralen Ende (22) aufnimmt, das dem äußeren radialen Ende (21) entgegengesetzt liegt, wobei der Faden durch das äußere radiale Ende austritt, wobei die Zufuhreinrichtungen die lineare Vorschubgeschwindigkeit des Fadens innerhalb der drehbaren Leitung steuern,
• Einrichtungen, um die drehbare Leitung (2) in Drehung zu versetzen,
• Einrichtungen, um den Faden in Stücke zu schneiden, die so auf den Faden einwirken, daß bei jeder Drehung der drehbaren Leitung (2) ein Abschnitt (10) freigegeben wird,
• eine Fadenführung (4) zur Aufnahme von Fadenabschnitten, wobei die Fadenführung in bezug auf die drehbare Leitung so angeordnet ist, daß sie den Faden in der Drehebene der Leitung aufnimmt, wobei die Fadenführung eine Projektionsöffnung (40) aufweist, aus der der Faden austreten kann,
• wobei die Fadenführung ein Paar von Ablenkblechen aufweist, die mindestens eine längliche, innere Freifläche begrenzen, die in der Drehebene liegt, die so ausgebildet sind, daß sie zwischen sich einen Schlitz freilassen, in dem jeder Fadenabschnitt verlaufen kann,
**dadurch gekennzeichnet, daß**
die Fadenführung eine einstückige Untereinheit ist, die eine einen Rahmen bildende Halterung (41) aufweist, die mit einer Auflagefläche (42) zur örtlich begrenzten Befestigung versehen ist, die die lösbare Befestigung der Fadenführung an der Einheit ermöglicht, und daß die Ablenkbleche einander gegenüber auf dem Rahmen angebracht sind.

2. Gerät nach Anspruch 1, das ausgebildet ist, um an Ort und Stelle eine Verstärkung eines Luftreifens während seiner Herstellung herzustellen, bei dem jedes Ablenkblech auf der Seite der Projektionsöffnung (40) eine Randleiste (44) aufweist, die so gekrümmt ist, daß sie sich der Form der Aufnahmefläche annähert.

3. Gerät nach Anspruch 1 oder 2, bei dem die Befestigungs-Auflagefläche wesentlich geringere Abmessungen aufweist als die Länge der Ablenkbleche gemessen entlang des Schlitzes.

4. Gerät nach einem der Ansprüche 1 bis 3, bei dem die Befestigungs-Auflagefläche kontinuierlich und vollständig von einer geschlossenen Linie umgrenzt ist.

5. Gerät nach einem der Ansprüche 1 bis 4, bei dem die Halterung im wesentlichen die Gestalt eines gekrümmten, geschlossenen und länglichen Rechtecks hat, das von zwei parallelen Schenkeln gebildet wird, die miteinander an ihren Enden verbunden sind, wobei die Ablenkbleche innerhalb der Schenkel angeordnet sind, und die Auflagefläche auf einem dieser Schenkel auf der einem dieser Ablenkbleche entgegengesetzten Seite angeordnet ist.

6. Gerät nach einem der Ansprüche 1 bis 5, bei dem der Abstand zwischen jedem Ablenkblech sich verringert, je weiter man sich der Projektionsöffnung nähert.

7. Gerät nach Anspruch 2, bei dem die Spur, die die rechtwinklige Projektion jeder der Randleisten in der Drehebene bildet, nicht geradlinig ist.

## Claims

1. An apparatus for manufacturing a reinforcement from a thread deposited directly at its final place by projecting lengths of said thread onto a receiving surface (S), said apparatus comprising an assembly (5) comprising:
• means for advancing the thread (1),
• a rotary conduit (2) fastened on a shaft (20) constituting the axis of rotation of said conduit, in such a manner that the outer radial end (21) of said conduit is oriented substantially radially with respect to the axis of rotation, said conduit receiving the thread (1) by its central end (22) opposite said outer radial end (21) coming from said advancing means, said thread emerging through said outer radial end, said advancing means controlling the linear speed of advance of the thread within said rotary conduit,
• means for driving said rotary conduit (2) in rotation,
• means for cutting the thread which act on the thread in such a manner as to free one length (10) upon each revolution of said rotary conduit (2),
• a thread guide (4) for receiving lengths of thread, said thread guide being positioned with respect to said rotary conduit in such a manner as to receive the thread in the plane of rotation of said conduit, said thread guide having a projection orifice (40) from which the thread can emerge,
• said thread guide comprising a pair of deflectors, defining at least one elongated inner passage, placed in said plane of rotation, said deflectors being arranged in such a manner as to leave between them a slit into which each length of thread can pass,
**characterised in that** the thread guide is a unitary subassembly comprising a cradle forming a frame (41) provided with a located fastening surface (42) which permits the detachable fastening of said thread guide to said assembly, and **in that** the deflectors are mounted facing each other on said frame.

2. An apparatus according to Claim 1, developed for the production in situ of a tyre reinforcement during its manufacture, in which each deflector comprises on the projection-orifice side (40) an edge (44) which is curved in such as manner as to approach the shape of said receiving surface.

3. An apparatus according to Claim 1 or 2, in which said fastening surface is of definitely smaller dimensions than the length of the deflectors, measured along said slit.

4. An apparatus according to any of Claims 1 to 3, in which said fastening surface is continuous and entirely circumscribed by a closed line.

5. An apparatus according to any of Claims 1 to 4, in which said cradle has substantially the shape of a closed, elongated, curved rectangle formed by two parallel branches connected together at their ends, said deflectors being mounted on the inside of said branches, and the surface being arranged on one of said branches, on the side opposite one of said deflectors.

6. An apparatus according to any of Claims 1 to 5, in which the distance between each deflector decreases as the projection orifice is approached.

7. An apparatus according to Claim 2, in which the trace which the perpendicular projection of each of said edges forms in the plane of rotation is nonlinear.
